Europäisches Patentamt

European Patent Office

Office européen des brevets

(19)

(11) **EP 0 840 252 B1**

(12) **FASCICULE DE BREVET EUROPEEN**

(45) Date de publication et mention
de la délivrance du brevet:
**17.09.2003  Bulletin 2003/38**

(51) Int Cl.⁷: **G06T 5/00**, G06T 5/30

(21) Numéro de dépôt: **97203086.0**

(22) Date de dépôt: **07.10.1997**

(54) **Procédé de traitement d'image numérique pour l'extraction automatique d'objets en forme de rubans**

Numerisches Bildverarbeitungsverfahren zur automatischen Extraktion bandförmiger Objekte

Digital image-processing method for the automatic extraction of ribbon-like objects

(84) Etats contractants désignés:
**DE FR GB**

(30) Priorité: **16.10.1996  FR 9612631**

(43) Date de publication de la demande:
**06.05.1998  Bulletin 1998/19**

(73) Titulaire: **Koninklijke Philips Electronics N.V.**
**5621 BA Eindhoven (NL)**

(72) Inventeur: **Makram-Ebeid, Shérif**
**75008 Paris (FR)**

(74) Mandataire: **Lottin, Claudine**
**Société Civile S.P.I.D.**
**156, Boulevard Haussmann**
**75008 Paris (FR)**

(56) Documents cités:
**FR-A- 2 623 642          US-A- 5 539 838**

• **OGNIEWICZ R L: "SKELETON-SPACE: A MULTISCALE SHAPE DESCRIPTION COMBINING REGION AND BOUNDARY INFORMATION" PROCEEDINGS OF THE COMPUTER SOCIETY CONFERENCE ON COMPUTER VISION A PATTERN RECOGNITION, SEATTLE, JUNE 21 - 23, 1994, 21 juin 1994, INSTITUTE OF ELECTRICAL AND ELECTRONICS ENGINEERS, pages 746-751, XP000515926**

## Description

L'invention concerne un procédé de traitement d'une image numérique pour l'extraction automatique d'objets substantiellement en forme de rubans représentés sur un fond. L'invention concerne aussi un dispositif mettant en oeuvre ce procédé, combiné à un système de formation d'images médicales.

L'invention trouve particulièrement son application dans l'industrie de fabrication des dispositifs à rayons X incluant des systèmes de visualisation d'artériogrammes, y compris les dispositifs dotés d'un mode de fonctionnement fluoroscopique.

Un procédé de traitement d'image pour la représentation robuste d'objets est déjà connu de la publication intitulée "Robust Object Représentation Through Object-Relevant Use of Scale" par Bryan MORSE, Stephen PIZER et alii, dans "104, SPIE, vol.2167, Image Processing, 1994, pp.104-115". Cette publication décrit un procédé de segmentation d'image pour séparer des objets et les représenter dans un forme appropriée à leur suivi (identification, tracking). Le but du procédé est de réussir une telle représentation en s'affranchissant des détériorations de l'image dues au bruit, au changement de grandissement sans changement de résolution, au flou etc..Cette publication définit un premier concept appelé "CORE" qui est le lieu des points situés au milieu de l'objet tel que mesuré à des échelles proportionnelles à la largeur dudit objet. Un point est dit situé au milieu, ou encore sur une ligne médiane de l'objet, s'il répond à deux conditions. La première condition est qu'il faut qu'il existe au moins deux points de bord situés à une distance r (appelée demi-largeur) ou bien rayon de ce point médian. La seconde condition est que la direction de ladite demi-largeur r doit être normale auxdits bords. Cette publication définit un second concept pour la mise en oeuvre du procédé, qui est que l'échelle de mesure, définie par un paramètre σ, doit être proportionnelle à la demi-largeur r. Dans la publication citée, le concept "CORE" ne représente pas des objets à une seule échelle d'un bout à l'autre d'une image, et même, ne représente pas un objet donné à une seule échelle à l'intérieur de l'objet lui-même. Le concept "CORE" représente un objet simultanément dans une fourchette d'échelles formant des courbes séparées à l'intérieur d'un espace d'échelles.

Les étapes de ce procédé de segmentation nécessitent d'abord le calcul des éléments appelés "CORE" par des sous-étapes pour :

1/ lisser l'image à plusieurs échelles pour construire un espace d'échelles qui décrit l'image à des multiples résolutions,
2/ évaluer à chaque échelle des nuages de points de bords potentiels, qui forment un premier ensemble flou (fuzzy) appelé "boundariness" et qui sont calculés au moyen d'opérateurs appropriés,
3/ évaluer des nuages de points médians, qui forment un second ensemble flou (fuzzy) appelé "medialness", qui sont définis par l'association de tous les points de bord potentiels, et qui sont calculés selon les deux conditions décrites plus haut, dans l'espace multirésolution,
4/ trouver des arêtes (ridges) dans l'ensemble flou appelé "medialness", qui sont des maxima d'intensité de ce second ensemble flou.

Le procédé décrit dans le document cité impose de localiser la, ou les lignes centrales d'un objet dans une image numérique en utilisant des nuages de points de bords conduisant à des nuages de points médians pour garder la notion d'ensemble flou le plus longtemps possible, dans un espace multirésolution, impliquant, pour chaque calcul, deux variables d'espace qui sont les coordonnées du point courant dans l'image, une variable σ qui est le noyau des filtres de lissage multirésolution et qui est proportionnelle à un rayon r à trouver, et une variable d'intensité liée audit point courant. Ces calculs doivent donc être menés à bien sur un nombre de points extrêmement élevé, le tout dans une géométrie non Euclidienne. Ce procédé n'est pas spécialement appliqué à réaliser la segmentation d'une image représentant des objets d'une forme particulière prédéterminée.

Une méthode de détection de motifs est connue du brevet des Etats Unis US No 5,539,838 (Shimura). La méthode du brevet Shimura cherche à délimiter deux ensembles = un premier ensemble des points qui appartiennent au "motif" de l'objet, et un second ensemble des points qui n'appartiennent pas au "motif" de l'objet. Ainsi, le brevet Shimura décrit un filtre circulaire qui est passé sur l'image numérique pour calculer la différence d'intensité entre le centre du filtre et des points de périphéries et, par un seuillage, décider quels points appartiennent au motif de l'objet et quels points sont exclus. Cette méthode délimite un motif assez flou. Le diagramme des bords montre une pente, donc les bords ne sont pas nets et ne peuvent pas être extraits sous forme de points de bord précis. Le brevet Shimura n'enseigne pas de méthode pour obtenir des points de bord précis et valides pour l'objet d'intérêt. Ce document n'enseigne pas non plus de méthode pour déduire les points médians de l'objet. On rappelle que les points médians ne sont pas seulement des points internes à l'objet, mais forment spécifiquement une ligne située à égale distance des bords. Il faut donc que les points de bord soient extraits avec une grande précision de manière à obtenir une ligne médiane avec une grande précision.

Une publication de R. L. Ogniewicz, "Skeleton-Space: a Multiscale Description Combining Région and Boundary Information" dans "Proceedings of the Computer Society, Conférence on Computer Vision and Pattern Récognition, Seattle, June 21-23, 1994, IEEE, pages 746-751, décrit une méthode de détermination des bords et des lignes médianes d'un objet. La méthode de cette publication part d'une série d'images numériques discrétisées à plusieurs échelles, c'est-à-dire où les intensités des points ne peuvent être que ZERO ou UN. Dans une image discrétisée, cette méthode fournit une technique comprenant:

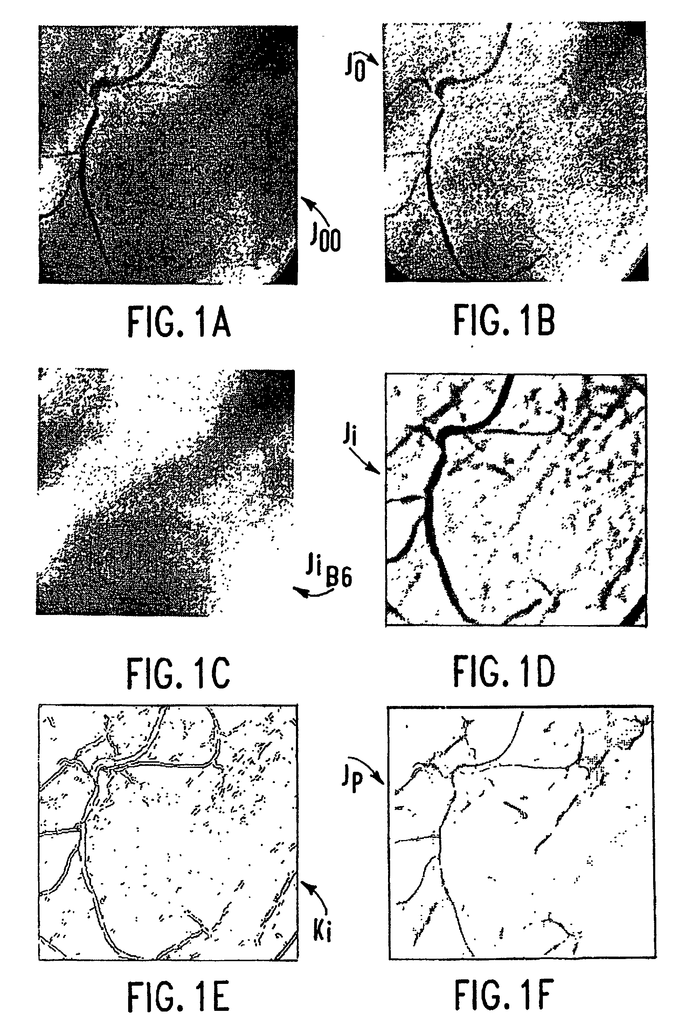

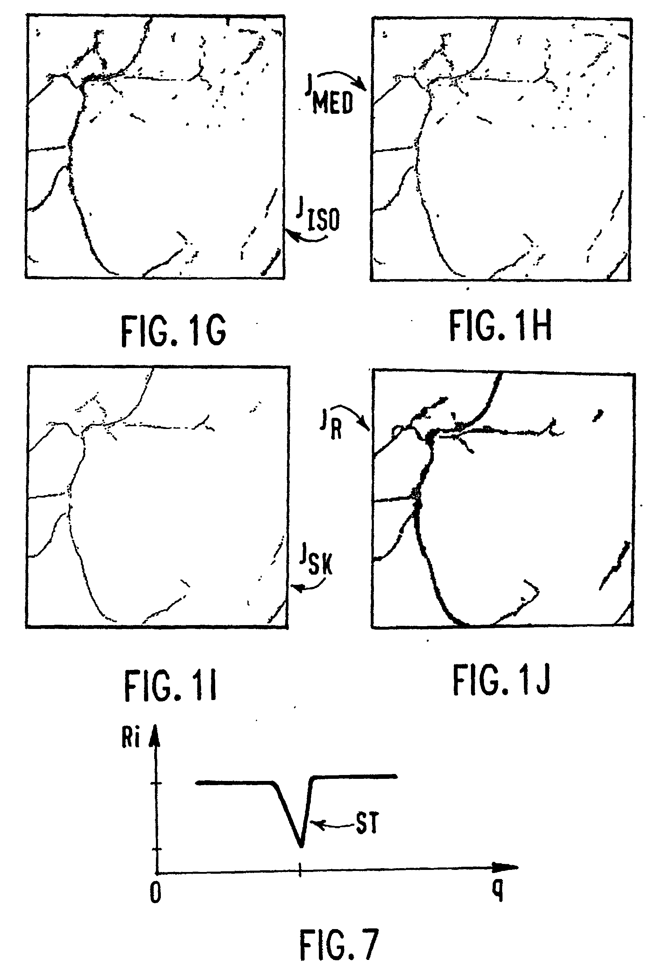

Une étape de détermination des limites de l'objet dans les images à plusieurs échelles. L'étape de détermination des limites de l'objet n'est pas décrite, mais ces limites sont automatiquement discrétisées, et. mises sous forme de petites chaînes linéaires accrochées les unes aux autres (Voir FIG. 1).

Une étape pour trouver directement les lignes médianes des objets (Voir FIGS. 1, 2, 4, 8). L'étape pour trouver les lignes médianes comprend une amélioration et simplification de la méthode de "VORONOI", (connue aussi sous la dénomination de "grassfire "). Cette amélioration emploie la propagation d'un "front" circulaire à partir des points de bord discrétisés considérés comme centres de cercles. Pour chaque cercle, la périphérie du cercle se propage à partir du dit centre de cercle situé sur le bord de l'objet: les périphéries de cercles se rencontrent sur la ligne médiane. Donc la méthode décrite est une méthode de Voronoi discrétisée.

Un but de la présente invention est de fournir un procédé de traitement d'image numérique qui résout le problème d'extraire, et non de segmenter, de manière automatique, des objets substantiellement en forme de rubans représentés sur un fond dans une image numérique, en mettant en oeuvre des étapes simples sur un petit nombre de pixels, menées à bien dans une géométrie Euclidienne, et peu consommatrices de temps de calcul.

Ce but est atteint par un tel procédé comprenant des étapes conformes à celles de la revendication 1.

Le procédé selon l'invention présente de nombreux avantages. Dans ce procédé, les calculs sont effectués dans des images planes, traitées une par une. Ces calculs sont simples et le temps de calcul est court. Ce procédé peut être appliqué à l'extraction et à l'identification des vaisseaux dans des artériogrammes complexes, à la caractérisation des sténoses ou des anévrismes dans des artériogrammes, à l'élimination d'objets ayant une géométrie connue également en forme de rubans de largeurs différentes de celles des vaisseaux, tels que les côtes qui sont gênantes dans l'examen d'artériogrammes des poumons pour la détection de l'emphysème.

Ce procédé et un dispositif mettant en oeuvre le procédé, sont décrits ci-après dans des exemples de réalisation illustrés par les figures schématiques annexées, dont :

- la FIG.1A représente une image numérique originale $J_{00}$,
- la FIG. 1B est une image $J_0$ filtrée,
- les FIG.1C à 1H sont des images $J(\sigma_i)$ lissées à une même échelle $\sigma_i$, et parmi ces figures,

- la FIG.1C est une image numérique $J_{iBG}$ d'estimation du fond,
- la FIG.1D est une image $J_i$ numérique dont le fond est extrait,
- la FIG.1E est une carte $K_i$ binaire des pixels de bord,
- la FIG.1F est une image $J_{iMED}$ numérique des pixels médians,
- la FIG.1G est une image numérique $J_{ISO}$ des pixels médians sélectionnés par la sélection isotrope,
- la FIG.1H est une image numérique $J_{LAT}$ des pixels médians sélectionnés par la sélection anisotrope ou latérale,
- la FIG.1I est une image numérique $J_{SK}$ des pixels médians chaînés par pistage pour former le squelette des objets,
- la FIG.1J est une image numérique reconstruite JR à l'échelle de l'image d'origine par intégration des surfaces des cercles associés aux pixels médians.
- la FIG.2 représente les étapes du procédé sous forme de blocs fonctionnels,
- les FIG.3A et 3B illustrent une étape d'extraction du fond à une échelle donnée $\sigma_i$ et selon différentes orientations ;
- la FIG.4 illustre l'étape d'extraction des bords à une échelle donnée $\sigma_i$ ;
- la FIG.5A illustre dans l'étape de recherche des pixels médians potentiels à une échelle donnée $\sigma_i$, la génération d'un cercle de rayons $R_i$ ;
- la FIG. 5B illustre l'extraction d'un premier pixel médian potentiel à une localisation donnée associé à un premier couple de pixels de bord et la FIG.5C illustre l'extraction d'un second pixel médian potentiel à la même localisation, associé à un second couple de pixels de bord pour effectuer une sous-étape de sélection isotrope ;
- la FIG.5D illustre la sous-étape de sélection latérale des pixels médians potentiels pour fournir les pixels médians ;
- la FIG.6 illustre l'étape de pistage des pixels médians pour fournir les pixels du squelette ;
- la FIG.7 illustre l'étape d'étude des variations des rayons d'un objet le long du squelette de cet objet ;
- la FIG.8 qui montre un dispositif médical à rayons X de formation d'images numériques.

**PROCEDE**

Les figures sont décrites ci-après en détail en relation avec les différentes étapes d'un procédé de traitement d'une image numérique, comprenant la représentation d'objets en forme de rubans contrastant sur un fond. Ces étapes effectuent une squelétisation des objets de l'image, pour fournir de manière automatique les pixels appartenant aux lignes médianes des objets et pour finalement reconstruire une image numérique où les objets ont un niveau d'intensité contrastant plus vigoureusement vis-à-vis du fond, appelé niveau d'intensité rehaussé.

Telle que représentée sur la FIG.1A dans l'application envisagée à titre d'exemple, l'image numérique d'origine $J_{00}$ est un artériogramme. Dans cet artériogramme, il existe des vaisseaux de diamètres très différents représentés par des rubans ici sombres sur un fond non uniforme. Les vaisseaux de fins diamètres sont en particulier difficiles à discerner.

Telle que représentée sur la FIG.1J, après le déroulement du procédé de segmentation, l'image $J_R$ est encore numérique et comprend exclusivement le système artériel de l'artériogramme de la figure 1A représenté avec un niveau d'intensité rehaussé contrastant sur un fond uniforme.

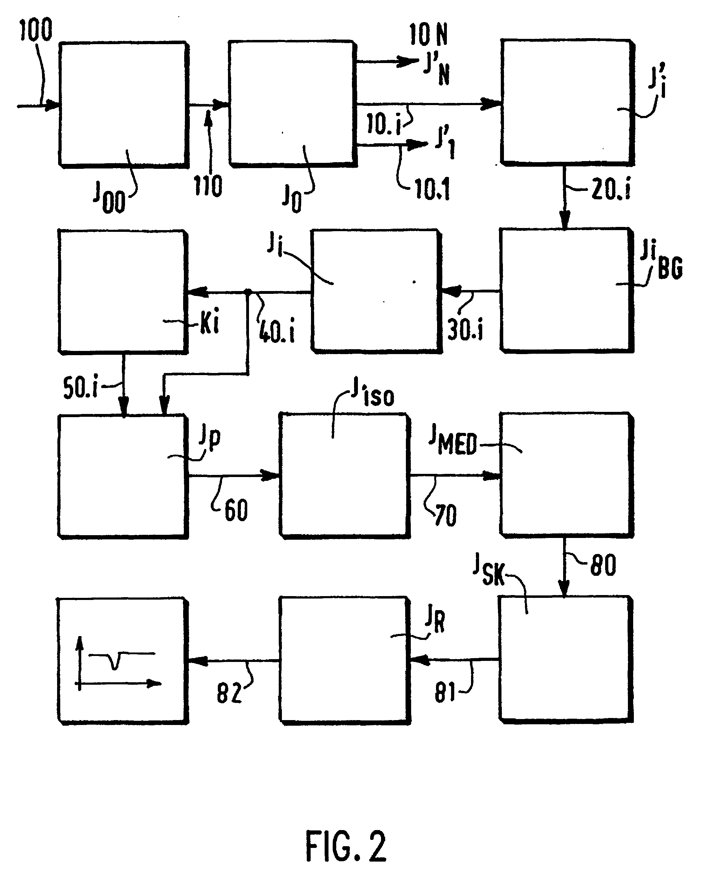

En référence avec la FIG.2, qui illustre le procédé sous forme de blocs fonctionnels, le procédé de traitement d'image comprend de préférence la suite d'étape décrite ci-après :

## 1/ Acquisition (100) d'une image numérique $J_{00}$

Telle que représentée sur la FIG.1A, l'image numérique est acquise par des moyens 100 de formation d'images numériques, sous la forme d'une matrice bidimensionnelle $J_{00}$ de pixels ayant des niveaux d'intensité numérisés. L'image acquise Joo représente, dans cet exemple, un artériogramme et les vaisseaux forment des rubans sombres sur un fond plus clair.

L'image acquise est alors soumise à un filtrage 110 qui rehausse l'intensité par exemple par une méthode de tabulation (Look-up Table) classique, pour fournir une image numérique $J_0$ représentée à titre d'exemple sur la FIG.1B.

## 2/ Filtrage multirésolution (10.1-10.N)

L'image filtrée $J_0$ est soumise à une série de N filtres passe-bas 10.1 à 10.N ayant pour noyaux des fonctions gaussiennes isotropes d'écart-types $\sigma_1$ à $\sigma_N$ différents qui déterminent les résolutions correspondantes des N images $J'_1$ à $J'_N$ lissées obtenues par ce filtrage. Le nombre N est par exemple tel que $2 \leq N \leq 100$ et l'indice i est tel que $1 \leq i \leq N$. De préférence N = 10. Dans l'exemple où N = 10, le filtrage multirésolution est effectué en passant sur l'image $J_0$, dix filtres gaussiens 10.1 à 10.10 ayant respectivement des noyaux caractérisés par des écarts-type $\sigma_1$ à $\sigma_{10}$, qui fournissent dix images numériques $J'_1$ à $J'_{10}$ lissées à dix résolutions différentes. Les écarts-types $\sigma_i$ sont désignés par le terme "échelle $\sigma_i$" et les images correspondantes par $J'_i$.

Dans chacune des images de la série, on étudie un type de vaisseau, et un seul, caractérisé par sa demi-largeur appelée $R_i$ telle que : $R_i > \sigma_i$. On étudie par exemple des vaisseaux de demi-largeur $R_i$ = k. $\sigma_i$. où k est une constante. De préférence k = 3, d'où $R_i = 3\ \sigma_i$. Le coefficient k et l'échelle $\sigma_i$ définissent donc le type de vaisseau que l'on cherche à détecter dans chacune des images $J'_i$ de la série. Le nombre et la valeur des échelles $\sigma_i$ doivent être choisis soigneusement afin de permettre la détection de tous les vaisseaux depuis les vaisseaux très fins jusqu'au vaisseaux très larges, ou autres objets en forme de rubans.

## 3/ Extraction du fond

Une étape 20.1 à 20.N d'extraction du fond est réalisée respectivement sur chacune des images lissées $J'_i$ à l'échelle $\sigma_i$, pour éliminer les éléments étrangers au système artériel à chaque résolution.

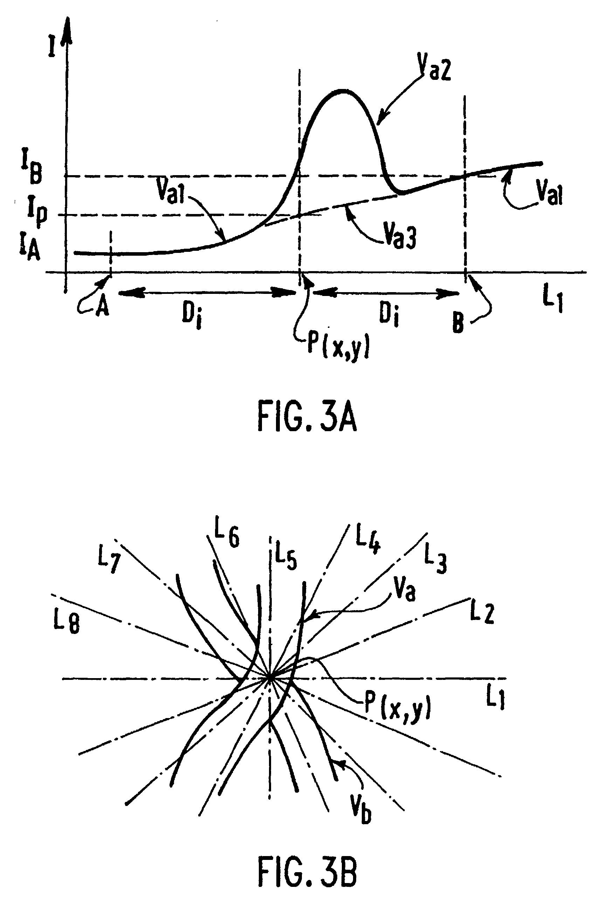

La FIG.3A représente un profil d'intensité I le long d'une ligne L1 de pixels qui intersecte un vaisseau Va dans l'image lissée $J'_i$. Ce profil d'intensité montre une partie Va1 à variations d'intensité lentes correspondant au fond, et une partie Va2 formant un dôme d'intensité correspondant au vaisseau. L'extraction du fond comprend le passage sur l'image lissée $J'_i$ d'un filtre 20.i centré sur un pixel courant P(x,y) de la ligne L1, et effectuant une moyenne entre une intensité $I_A$ d'un pixel A situé à une distance donnée $D_i$ à gauche du pixel courant P(x,y) et une intensité $I_B$ d'un pixel B situé à la même distance $D_i$ à droite du pixel courant P(x,y) sur la ligne L1. L'intensité moyenne calculée est attribuée au pixel courant P(x,y).

Par le passage de ce filtre 20.i, le dôme d'intensité Va2 dû au vaisseau est éliminé, et une partie Va3 de niveau d'intensité est estimée pour constituer le fond à l'emplacement du vaisseau.

Cette étape de filtrage 20.i est effectuée en adoptant, à l'échelle $\sigma_i$, une valeur de distance $D_i$ telle que :

$$D_i > R_i = k\ \sigma_i\ ;\ \text{par exemple } D_i > 3\ \sigma_i.$$

En référence à la FIG.3B qui représente schématiquement des vaisseaux 2Va et 2Vb dans l'image lissée $J'_i$, l'étape de filtrage 20.i est effectuée selon une pluralité P de directions L1 à LP régulièrement réparties dans le plan de l'image $J'_i$ de $\pi/P$ en $\pi/P$. De préférence, P = 8 et on effectue le filtrage 20.i selon 8 directions espacées angulairement régulièrement de $\pi/8$ en $\pi/8$.

En chaque pixel courant P(x,y), la valeur d'intensité du fond est ensuite estimée comme la valeur la plus faible de toutes les valeurs estimées en faisant varier l'orientation L1 à LP, à l'échelle $\sigma_i$ donnée. Par cette opération de filtrage 20.i, une image estimée du fond $J_{iBG}$ est obtenue pour chaque échelle $\sigma_i$, comme par exemple représentée sur la FIG.1C.

Puis, comme par exemple représentée sur la FIG.1D, une image $J_i$ est formée en attribuant aux pixels des données d'intensités calculées en soustrayant, par une étape de soustraction 30.i, les valeurs d'intensité estimées pour le fond et prélevées dans l'image $J_{iBHG}$, des données d'intensité de l'image lissée correspondante $J'_i$.

On obtient alors N images dont le fond a été extrait, notées $J_i$, aux diverses échelles $\sigma_i$.

Ce procédé d'extraction du fond est très avantageux parce qu'il ne crée pas de défauts, d'erreurs ou d'imprécision dans les régions de superposition des vaisseaux, et parce qu'il n'est pas gourmand en temps de calcul.

### 4/ Extraction des bords des objets dans la série d'images $J_i$

Une étape 40.i est menée à bien pour extraire les bords des vaisseaux ayant des rayons $R_i$ étudiés dans chaque image $J_i$ à une échelle donnée $\sigma_i$, incluant une détermination des gradients d'intensité au moyen du calcul des dérivées d'ordre 1 de la fonction d'intensité dans l'image $J_i$, selon des axes de balayage perpendiculaires notés x'x et y'y, en chaque pixel courant P(x,y) à traiter.

De préférence, le gradient d'intensité est obtenu par le passage, selon des directions parallèles aux axes x'x et y'y, de filtres orientés connus sous le nom de "Sovel" et notés ci-après Sovel$_x$ selon l'axe x'x et Sovely selon l'axe y'y. La mise en oeuvre des filtres de Sovel est décrite dans un ouvrage d'enseignement général intitulé "Computer Vision" par Dana H. Balard et Christopher M. Brown, publié chez PRENTICE-HALL, Inc., Englewood, Cliffs, New Jersey, US, 07632 p.77, 1.6-17 en relation avec la FIG.3.10C.

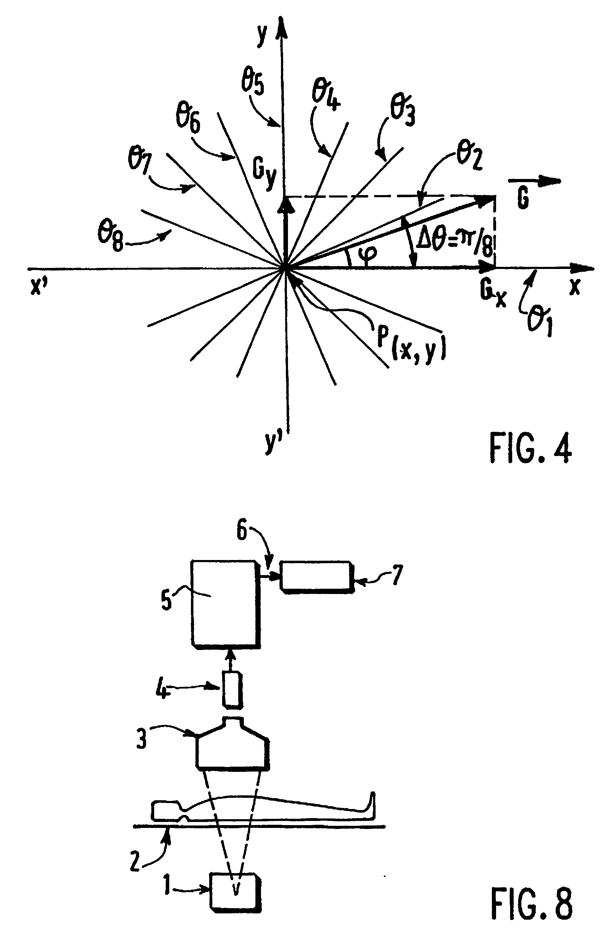

Comme illustré par la FIG.4, par l'application des filtres Sovel$_x$ et Sovel$_y$, on obtient des composantes $\vec{G}_x$ et $\vec{G}_y$1, selon les axes x'x et y'y, du vecteur gradient d'intensité $\vec{G}$2 au pixel courant P(x,y). Le calcul du rapport de ces composantes $\vec{G}_x$ et $\vec{G}_y$3 fournit la valeur de la tangente d'un angle _ que fait ce vecteur gradient $\vec{G}_4$ par exemple avec l'axe x'x pris comme référence. Par le calcul de la somme des projections des composantes $\vec{G}_x$ et $\vec{G}_y$5 sur la direction _, on déduit également le module _$\vec{G}$_6, au signe près, de ce vecteur gradient. On définit ainsi, en chaque pixel courant, le vecteur gradient par son angle d'orientation _ et son module _$\vec{G}$_7.

L'angle _ est ensuite discrétisé avec un pas $\pi$/M où M est une constante. Par exemple, la constante M est choisie égale à 8 et le pas d'angle à $\pi$/8. L'angle associé au module du gradient _$\vec{G}$_8 est alors non plus _, mais un angle $\theta_j$ qui est l'angle discret choisi le plus proche de _. Dans le cas d'un pas d'angle $\pi$/8, l'angle $\theta_j$ associé au gradient prend les valeurs : $\theta_1 = 0$ ; $\theta_2 = \pi/8$ ; $\theta_3 = \pi/4$ ; $\theta_4 = 3\pi/8$ ; $\theta_5 = \pi/2$ ; $\theta_6 = 5\pi/8$ ; $\theta_7 = 3\pi/4$ ; $\theta_8 = 7\pi/8$.

L'extraction des bords dans une image $J_i$ à une échelle donnée $\sigma_i$ comprend ensuite l'élimination des gradients non extrémaux. Cette opération est réalisée en balayant l'image traité $J_i$ selon une pluralité Q de directions régulièrement réparties dans le plan de l'image $J_i$, de $\pi$/Q en $\pi$/Q.

Dans un exemple, on choisit Q = 8. Dans ce cas, les directions de balayage correspondent aux angles discrets $\theta_1$ à $\theta_8$. Les pixels courants montrant un gradient maximal par rapport à leurs voisins sur chaque direction donnée, sont sélectionnés comme pixels de bord, et leur intensité est mise à zéro, tandis que l'intensité des pixels montrant un gradient non maximal est mise à 1, ou l'inverse.

Dans un autre exemple, on choisit Q = 4. Par exemple, les directions de balayage correspondent aux angles discrets $\theta_1$, $\theta_3$, $\theta_5$, $\theta_7$. Dans ce cas, lors du balayage, les gradients ayant des angles $\theta_2$ et $\theta_8$ sont projetés sur la direction $\theta_1$, tandis que les gradients ayant des angles $\theta_4$ et $\theta_6$ sont projetés sur la direction $\theta_5$. Les pixels courants montrant un gradient maximal sont sélectionnés et extraits comme décrit plus haut.

D'autres méthodes de balayage sont possibles selon un petit nombre d'axes régulièrement angulairement répartis dans le plan de l'image. Lors du balayage, les gradients sont projetés sur celle de ces directions la plus proche de son orientation calculée $\theta_1$ à $\theta_M$ et les pixels correspondants aux valeurs maximales de projections des gradients sont sélectionnés comme pixels de bords.

Une image binaire $K_i$, appelée carte des pixels de bords est construite à partir de ces données, à chaque échelle $\sigma_i$, comme par exemple montré sur la FIG. 1E.

### 5- Extraction de pixels médians potentiels

#### 5.1 Localisation de pixels médians potentiels

Chaque pixel de bord est muni de caractéristiques qui sont :

ses coordonnées x,y dans l'image $K_i$
et une direction $\theta_j$ parmi $\theta_1$ à $\theta_M$.

La direction $\theta_j$ est celle du vecteur gradient avec une imprécision inférieure à $\pi$/M. Dans l'exemple décrit, la direction $\theta_j$ est celle du vecteur gradient avec une imprécision inférieure à $\pi$/8 ; l'angle _ du vecteur gradient est dans une fourchette de $\pm$ $\pi$/8 centrée sur la direction discrète $\theta_j$.

Ces caractéristiques sont utilisées pour effectuer, dans chacune des images numériques $J_i$, dans une étape 50.i, une localisation de pixels médians potentiels, c'est-à-dire de pixels situés substantiellement à égal distance des bords des objets en forme de ruban, ou de vaisseaux.

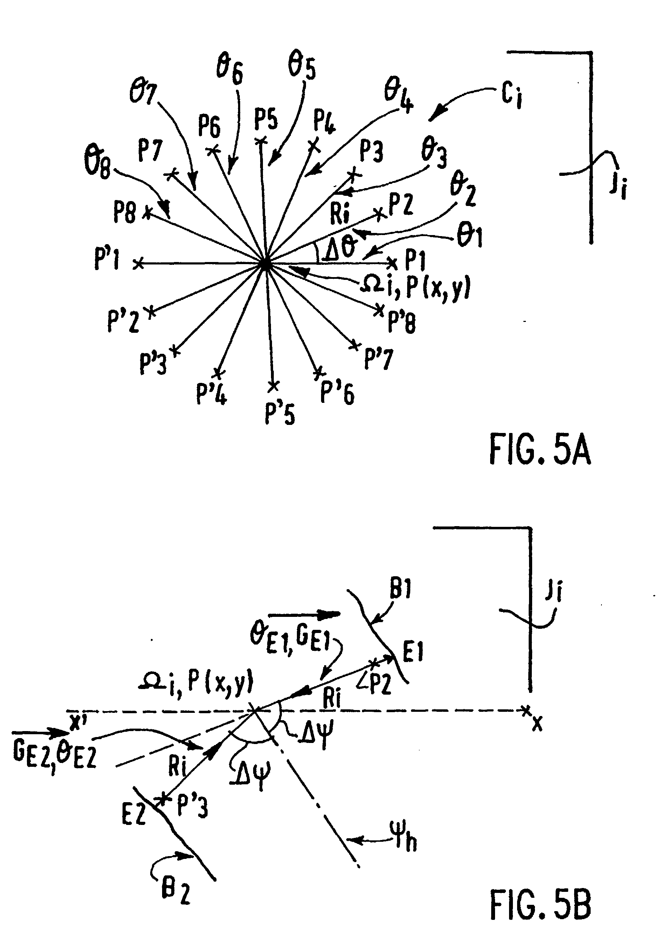

A cet effet, dans l'étape 50.i, dans chaque image $J_i$ en référence à la FIG.5A, on génère d'abord un cercle, noté $C_i$, ayant un centre $\Omega_i$, un rayon de valeur $R_i$ liée à l'échelle $\sigma_i$ comme décrit précédemment, et formé de pixels $P_j$, $P'_j$ disposés à partir du centre $\Omega_i$ à une distance substantiellement égale à $R_i$, sur des rayons orientés de manière discrète selon les directions discrètes $\theta_j$ des gradients d'intensité déterminées plus haut. Puis, on balaye chaque image $J_i$ de manière conventionnelle, par exemple selon l'axe x'x, et, en référence à la FIG.5B, on applique en chaque pixel courant P(x,y) de localisation x,y, le centre $\Omega_i$ du cercle généré comme ci-dessus. On cherche s'il existe au moins un pixel E1 de bord substantiellement en coïncidence avec un pixel $P_j$, $P'_j$ de cercle $C_i$ sur un rayon dans une des directions discrètes $\theta_j$, et si la direction discrète d'orientation du gradient d'intensité $\vec{G}_E$19 associée à ce pixel de bord $E_1$ coïncide substantiellement avec la direction $\theta_j$ de ce rayon. Un tel pixel de bord $E_1$ est alors situé sur un premier rayon de tangence d'un bord $B_1$ incluant le pixel $E_1$ vis-à-vis du cercle de centre $\Omega_i$ localisé en x,y et de rayon $R_i$.

Si un tel premier pixel de bord $E_1$ est trouvé, on cherche dans les mêmes conditions s'il existe un deuxième pixel $E_1$ de bord, distinct du premier, substantiellement en coïncidence avec un autre pixel du cercle $C_i$ sur un rayon dans une autre des directions discrètes $\theta_j$ et si la direction discrète d'orientation du gradient d'intensité $\vec{G}_E$210 associée à ce pixel de bord $E_2$ coïncide avec la direction de ce rayon. Un tel deuxième pixel $E_2$ de bord est alors situé sur un second rayon de tangence d'un bord $B_2$ incluant le pixel $E_2$ vis-à-vis du cercle de centre $\Omega_i$ localisé en x,y et de rayon $R_i$.

Les pixels de bord $E_1$ et $E_2$ sont appariés si ces conditions sont réunies et si en outre les vecteurs gradients, soit pointent tous deux vers le centre $\Omega_i$, soit en sens opposé, selon que l'image $J_i$ à traiter est formée d'objets sombres sur fond clair ou l'inverse. Dans ces conditions, il existe un cercle $C_i$ de rayon $R_i$ substantiellement tangent à un premier bord $B_1$ et à un second bord $B_2$ respectivement en $E_1$ et $E_2$.

On peut ainsi définir dans la même image $J_i$, ou dans différentes images $J_i$ à différentes échelles $\sigma_i$, plusieurs couples de pixels $E_1$, $E_2$ de bord correspondant à une localisation donnée x,y. Les centres $\Omega_i$ associés à ces différents couples sont appelés pixels médians potentiels $\Omega_{iP}$.

### 5.2 - Mesure de confiance

Dans l'étape 50.i, en outre, à chaque pixel médian potentiel $\Omega_{ip}$, on associe une mesure de confiance d'être substantiellement dans l'alignement des pixels du couple $E_1$, $E_2$.

A cet effet, en référence aux FIG.5B et FIG.5C, on définit l'angle formé entre les directions discrétisées $\theta_{E1}$, $\theta_{E2}$ des gradients d'intensité associés aux pixels du couple $E_1$, $E_2$, et on définit une direction discrète privilégiée $\psi_h$, associée au pixel médian potentiel $\Omega_{ip}$ qui est celle de la bissectrice de cet angle, et qui détermine une mesure du demi-angle $\Delta\psi$ entre les directions discrétisées $\theta_{E1}$, $\theta_{E2}$. L'indice h est une constante de discrétisation liée à j. La mesure de confiance associée à un pixel médian potentiel $\Omega_{ip}$ est donnée par le produit de la plus petite des deux valeurs de gradient d'intensité, relatives respectivement aux pixels du couple E1, E2, par la valeur du sinus du demi-angle $\Delta\psi$. Cette mesure de confiance est d'autant plus grande que le sinus du demi-angle $\Delta\psi$ est proche de 1, donc que le demi-angle

$\Delta\psi$, est proche de $\pi/2$, correspondant au cas où le pixel médian potentiel est proche de l'alignement avec les pixels du couple $E_1$, $E_2$, comme illustré par la FIG. 5C.

Les données relatives à la localisation des pixels médians potentiels $\Omega_{iP}$ et aux mesures de confiance associées sont alors extraites et stockées. Chacun des pixels $\Omega_{ip}$ correspondants est un candidat pour former les pixels médians des objets. Les meilleurs candidats doivent être sélectionnés. Une image numérique $J_p$ à l'échelle de départ de l'image $J_0$, formée des pixels médians potentiels $\Omega_{ip}$ est illustrée par la FIG.1F.

### 6 - Extraction des pixels médians

#### 6.1 : Sélection isotrope

A une même localisation donnée x,y, on examine dans une étape 60i s'il existe dans une même image $J_i$ ou dans différentes images $J_i$, à différentes échelles, plusieurs pixels médians potentiels associés à des couples de pixels de bord différents $E_1$, $E_2$ et associés à des mesures de confiance différentes. Dans ce cas, une première sélection appelée isotrope est opérée pour conserver le meilleur candidat. Cette sélection consiste à déterminer celui des pixels médians potentiels ayant cette localisation x,y dans une image $J_i$ qui a en outre la mesure de confiance maximale, et à éliminer les autres pixels médians potentiels de même localisation dans la même image $J_i$. Par ailleurs, on peut sélectionner un pixel médian potentiel ayant une mesure de confiance maximale vis-à-vis de pixels médians potentiels de même localisation x,y, mais extraits d'images $J_1$ à $J_M$ différentes. Dans ce cas, on favorise la détection d'objets ayant un diamètre différent de $2R_i$, c'est-à-dire plus petit ou plus grand, ce qui est d'un grand intérêt en cas de croisement d'objets. Les pixels médians potentiels restants forment une image numérique $J_{ISO}$ telle que représentée sur la FIG.1G.

#### 6.2 : Sélection anisotrope

Ces pixels médians potentiels restants, du fait de leur mesure de confiance maximale, sont substantiellement dans l'alignement des pixels du couple associé $E_1$, $E_2$.

Les pixels médians potentiels restants ont des localisations différentes. On effectue alors dans une étape 70, une seconde sélection, appelée anisotrope. A cet effet, l'image est balayée selon une droite perpendiculaire à la direction privilégiée $\psi_h$. Un pixel médian potentiel $\Omega_{ip}$ est sélectionné comme pixel médian $\Omega_{iM}$ si son intensité est maximale vis-à-vis de ses voisins dans une fenêtre inférieure ou égale au rayon $R_i$ défini plus haut.

Une image numérique $J_{MED}$ telle qu'illustrée par la FIG.1H est construite à l'échelle de l'image $J_0$ avec tous les pixels sélectionnés comme pixels médians $Q_{iM}$ des objets en forme de ruban ou vaisseaux et qui ont été extraits de toutes les images $J_i$.

## 7. Pistage des pixels médians pour constituer le squelette des objets

Dans l'image $J_{MED}$, les pixels extraits dans l'étape précédente comme pixels médians des objets sont chaînés dans une étape 80 pour construire le squelette des objets, à partir d'un pixel médian de départ, en déterminant des pixels adjacents.

Les pixels médians extraits $\Omega_{iM}$ sont munis de leurs caractéristiques prélevées dans l'image $J_{MED}$ et dans les images $J_i$ d'où ils ont été extraits, qui sont :

leur localisation x,y dans l'image $J_{MED}$
leur intensité de départ dans l'image $J_{MED}$
la direction privilégiée $\psi_h$ qui leur est associée et qui a été déterminée dans l'image lissée $J_i$,
l'échelle $\sigma_i$ de l'image lissée $J_i$ d'où ils ont été extraits.

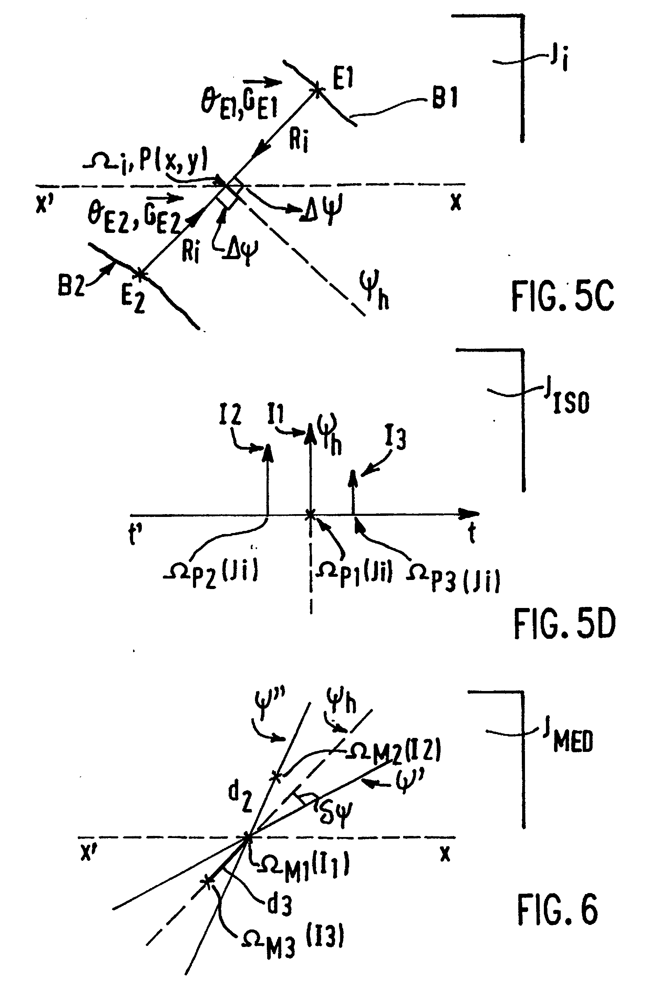

En référence à la FIG.6, l'image $J_{MED}$ est balayée de façon conventionnelle. En un pixel médian de départ, on cherche les meilleurs voisins parmi les autres pixels médians pour former le pixel prédécesseur et le pixel suiveur du squelette.

A cet effet, on prédétermine un angle $\pm \delta\psi$ de recherche, par exemple $\pm \pi/8$, autour de la direction privilégiée $\psi_h$ et on cherche les meilleurs voisins dans la zone sectorielle ainsi formée entre les droites $\psi'$ et $\psi''$ formant autour de $\psi_h$ des angles $\pm \delta\psi$. Dans cette zone sectorielle, on prédétermine une distance d maximale de recherche, par exemple d = 15 pixels. On cherche alors les pixels prédécesseur et suiveur qui ont l'intensité la plus proche de celle du pixel de départ dans la zone sectorielle et dans la fourchette de distance. En outre, on admet de chaîner non seulement les pixels médians qui ont été extraits d'une même image lissée à une échelle $\sigma_i$ donnée, mais aussi des pixels médians qui ont été extraits d'autres images lissées aux échelles les plus proches. On prédétermine par exemple que l'on admet comme meilleurs voisins des pixels médians qui ont été extraits dans les images lissées à une ou deux échelles supérieures et inférieures.

Les pixels médians $\Omega_{iM}$ trouvés comme meilleur prédécesseur et suiveur, aussi appelés adjacents, sont attachés au pixel médian considéré. Puis de proche en proche, on cherche d'une part les meilleurs prédécesseurs et d'autre part les meilleurs suiveurs et on construit ainsi, à partir de l'image numérique $J_{MED}$, un chaînage de pixels formant le squelette des objets constitué des pixels médians c'est-à-dire des pixels situés à égal distance des bords des objets. Lorsqu'on ne trouve plus de prédécesseur ou suiveur pour une chaîne donnée, on arrête la chaîne, et on commence une autre chaîne à partir d'un autre pixel médian comme pixel de départ. Il en résulte que les squelettes des différents objets sont extraits indépendamment les uns des autres, comme illustré par l'image $J_{SK}$ de la FIG. 1I.

On attribue par exemple, pour les applications ultérieures, des numéros q d'une suite continue à chaque pixel de chaînes de pixels médians.

## 8. Applications

### 8.1 Reconstruction d'objets dans l'image

Dans cette application, on réalise une opération supplémentaire 80 de reconstruction des objets en forme de ruban en intégrant les surfaces des différents cercles de rayons $R_i$ liés aux différentes échelles $\sigma_i$, ayant pour centres les pixels du squelette, en attribuant à ces surfaces les intensités de ces centres.

On obtient ainsi une image numérique $J_R$, comme illustré par la FIG.1J, des objets dont l'intensité est rehaussée puisque l'on a sélectionné comme pixels médians $\Omega_{iM}$ et ultérieurement comme pixel du squelette, les pixels d'intensité extrémale. Cette image peut être soit visualisée, soit enregistrée sur des systèmes appropriés. Un certain nombre de données concernant chaque pixel du squelette sont stockées. Ces données sont :

son numéro q,
le rayon $R_i$ du cercle correspondant à l'échelle de l'image d'où le pixel est extrait.

### 8.2 Elimination d'objets gênants dans l'image

Par la méthode décrite plus haut, les objets sont extraits individuellement puisque les pixels du squelette sont déterminés par la méthode de pistage décrite qui élimine, comme ne faisant pas partie du même objet, les pixels prédécesseur ou suiveur dont la direction privilégiée $\psi_h$ est trop éloignée de celle des pixels pistés. Ainsi deux objets qui se croisent ne peuvent être détectés comme un seul objet : ils sont détectés comme des objets individuels.

Cet avantage est utilisé pour une opération 81 d'élimination des objets gênants de l'image. Ainsi, il se pose un problème dans les artériogrammes thoraciques pour la recherche de l'emphysème où les côtes sont des objets en forme de ruban qui gênent l'examen des vaisseaux, également en forme de ruban, mais de diamètre différent. Les objets formés par les côtes sont éliminés en extrayant les objets en forme de ruban du diamètre correspondant aux côtes.

### 8.3 Détection des sténoses ou des anévrismes

Dans une autre application, des courbes de variations des rayons $R_i$ en fonction du numéro "q" du pixel du squelette sont générées par une opération 82 qui permet de détecter facilement une variation abrupte du diamètre de l'objet, comme montré FIG.7.

Sur de telles courbes, on détecte ainsi des rétrécissements abruptes ST qui peuvent correspondre à des sténoses, ou des augmentations abruptes du diamètre de l'objet qui peuvent correspondre à des anévrismes. On est raisonnablement sûr qu'une augmentation de diamètre est relative à un anévrisme sur un objet donné et n'est pas due à un croisement d'objets du fait que les objets sont extraits de maniéré indépendante.

Cela est différent du résultat d'un procédé de segmentation selon lequel on ne peut pas séparer deux objets qui se croisent ou qui se recouvrent.

## DISPOSITIF A RAYONS X

En référence à la FIG.8, à titre d'exemple, un système de radiographie numérisée comprend une source 1 de rayons X ; une table mobile 2 pour recevoir un patient ; un dispositif intensificateur d'image 3 couplé à un tube vidéo 4, qui fournit des données à un système 5 de traitement numérique d'image comprenant un microprocesseur. Ce dernier comprend plusieurs sorties dont une sortie 6 couplée à un moniteur 7 pour la visualisation de l'image radiographique ou des images d'intensité.

L'image radiographique numérisée peut contenir 512 x 512 ou 1024 x 1024 pixels codés sur 8bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé.

L'image numérisée peut être obtenue en mode fluoroscopique. L'invention peut trouver son application particulièrement dans le traitement d'images artériographiques.

Le traitement de l'image numérique selon le procédé décrit plus haut est mis en oeuvre dans ses différentes étapes et opérations dans le système 5. Les données sont stockées dans une zone mémoire non représentée et affichées si besoin sur le moniteur 7. Des moyens d'enregistrement non représentés peuvent être en outre utilisés.

## Revendications

1. Procédé de traitement d'une image numérique pour l'extraction automatique d'objets substantiellement en forme de rubans représentés sur un fond, ce procédé incluant une opération de squelétisation des objets, procédé **caractérisé en ce qu'**il comprend des étapes de:

   1) formation, à partir de l'image numérique non discrétisée ($J_0$), d'images lissées non discrétisées ($J_i$) à plusieurs échelles ($\sigma_i$),
   2) extraction des pixels de bord des objets, dans chaque image lissée, comprenant l'extraction d'un pixel comme pixel de bord d'un objet lorsque la valeur du gradient d'intensité associée à ce pixel est localement maximale dans une direction discrétisée ($\theta_1... \theta_M$) d'orientation de ce gradient,
   3) extraction de pixels médians potentiels ($\Omega_{ip}$), dans chaque image lissée, comprenant l'extraction d'un pixel comme pixel médian potentiel lorsqu'il est localisé au centre ($\Omega_i$) d'un cercle de rayon ($R_i$) lié à l'échelle ($\sigma_i$) par une constante de proportionnalité (k), tangent aux bords extraits en un couple de pixels de bord distincts ($E_1$, $E_2$), et lorsqu'il est associé à une mesure de confiance que le centre ($\Omega_i$) du cercle et les pixels du dit couple ($E_1$, $E_2$) de pixels de bord sont substantiellement alignés,
   4) extraction des pixels médians $\Omega_{iM}$ dans l'image numérique, comprenant l'extraction d'un pixel comme pixel médian par une première sélection des pixels médians potentiels extraits des différentes images lissées, qui ont la mesure de confiance maximale pour une même localisation, et par une deuxième sélection des pixels médians potentiels restants qui ont localement une intensité maximale substantiellement selon la direction d'alignement des pixels médians précédemment extraits,
   5) pistage des dits pixels médians extraits, dans une image numérique ($J_{MED}$) formée des pixels médians extraits, pour construire des squelettes des objets.

2. Procédé selon la revendication 1, dans lequel, dans l'étape 3), un pixel est extrait comme pixel médian potentiel ($\Omega_{ip}$) associé au centre ($\Omega_i$) du dit cercle:

   lorsque les pixels du dit couple ($E_1$, $E_2$) de pixels de bord distincts, sont substantiellement situés sur ledit cercle, sur des rayons de tangence du dit cercle qui coïncident substantiellement avec des directions discrétisées d'orientation des gradients des dits pixels de bord ($E_1$, $E_2$) du couple,
   et lorsque ledit pixel médian potentiel extrait est associé à une mesure de confiance constituée par le produit de la plus petite valeur des gradients d'intensité des pixels de bord du couple par la valeur du sinus du demi-angle entre les directions discrétisées d'orientation des gradients correspondantes, et comprend l'extraction d'autant de pixels médians potentiels associés à une même localisation (x,y) qu'il existe de tels couples dans les différentes images lissées ($J_i$).

3. Procédé selon la revendication 2, dans lequel :

dans l'étape 4), la première sélection d'un pixel médian potentiel parmi plusieurs pixels médians potentiels de même localisation dans les différentes images lissées ($J_i$) opère l'extraction de celui pour lequel le produit constituant la mesure de confiance est maximal, et la deuxième sélection d'un pixel médian parmi des pixels médians potentiels restants opère l'extraction de celui qui présente une intensité maximale considérée sur une direction d'orientation perpendiculaire à la direction discrète ($\psi_h$) d'orientation de la bissectrice de l'angle entre les directions ($\theta_j$) discrétisées d'orientation des gradients des pixels de bord du couple ($E_1$, $E_2$) associé à ce pixel médian.

4. Procédé selon la revendication 3, dans lequel :

dans l'étape 5), le pistage des pixels médians extraits est effectué en associant chaque pixel médian extrait avec des caractéristiques incluant:

sa localisation dans l'image numérique ($J_{MED}$) ,
son intensité dans l'image numérique ($J_{MED}$),
l'échelle ($\sigma_i$) de l'image lissée ($J_i$) d'où il est extrait,
une direction privilégiée ($\psi_h$) constituée par la direction discrète d'orientation de la bissectrice de l'angle entre les directions ($\theta j$) discrétisées d'orientation des gradients des deux pixels ($E_1$, $E_2$) de bord du couple qui lui est associé dans l'image lissée ($J_i$) d'où il est extrait,
et la détermination, à partir d'une localisation d'un pixel médian extrait, d'un pixel médian adjacent défini comme un pixel médian extrait ayant des caractéristiques de distance (d), intensité (I), échelle ($\sigma_i$), et direction privilégiée ($\psi_h$), dans des fourchettes prédéterminées, et le chaînage de proche en proche de pixels médians adjacents.

5. Procédé selon l'une des revendications 2 à 4, dans lequel :

l'étape 3) comprend la génération d'un cercle de centre ($\Omega_i$) localisé au pixel courant P(x,y), et formé de pixels disposés autour du centre à une distance substantiellement égale à la valeur de rayon ($R_i$) proportionnelle à l'échelle ($\sigma_i$) de l'image lissée ($J_i$), ces pixels du cercle étant en outre disposés sur des rayons selon les directions discrétisées ($\theta_1...\theta_M$) d'orientation associées aux gradients d'intensité des pixels de bord,
et comprend le passage de ce cercle sur l'image lissée, la recherche d'un premier pixel de bord ($E_1$) coïncidant substantiellement avec un pixel du cercle, et ayant une direction discrète ($\theta_{E1}$) d'orientation de gradient coïncidant substantiellement avec le rayon correspondant du cercle, et, si ce premier pixel (E1) de bord est trouvé, la recherche d'un second pixel (E2) de bord coïncidant substantiellement avec un pixel du cercle distinct ayant une direction ($\theta_{E2}$) discrète d'orientation du gradient coïncidant substantiellement avec le rayon correspondant du cercle, pour former un couple (E1, E2) de pixels de bord associé au pixel centre ($\Omega_i$) formant un pixel médian potentiel ($\Omega_{iP}$)

6. Procédé selon l'une des revendications 2 à 5, comprenant dans l'étape 2) d'extraction des pixels de bord, la détermination des orientations des gradients d'intensité, la discrétisation de ces orientations selon une pluralité de directions ($\theta_1$ à $\theta_M$) angulairement réparties de $\pi/M$ en $\pi/M$ dans le plan de l'image lissée à l'échelle considérée ($\sigma_i$) et l'application d'un critère pour l'extraction des pixels de bord constitué par la condition qu'un pixel est détecté comme pixel de bord, et ultérieurement extrait, si la valeur du gradient est maximale considérée localement selon cette direction discrète déterminée.

7. Procédé selon la revendication 6, comprenant dans l'étape 4) de seconde sélection des pixels médians, la détermination d'une direction d'orientation discrétisée de la bissectrice formant une direction privilégiée ($\psi_h$) associée au pixel médian potentiel ($\Omega_{ip}$) , le balayage de l'image lissée considérée perpendiculairement à cette direction privilégiée, et la sélection d'un pixel médian d'intensité extrémale selon cette direction dans une fenêtre de largeur inférieure ou égale au rayon ($R_i$) du cercle.

8. Procédé selon l'une des revendications 1 à 7, comprenant en outre une étape de reconstruction des objets en forme de ruban en intégrant les surfaces de cercles de différents rayons ($R_i$) liés aux échelles ($\sigma_i$) ayant pour centres les pixels du squelette, en attribuant à ces surfaces les intensités de ces centres.

9. Procédé selon l'une des revendications 1 à 8, comprenant en outre une étape de détermination des variations de diamètres des objets en forme de ruban en examinant les variations du rayon ($R_i$) en fonction d'un numéro (q) d'une suite attribué à chaque pixel consécutif du squelette.

10. Procédé selon l'une des revendications 1 à 9, incluant une étape d'extraction du fond pratiquée sur les images lissées, avant l'étape d'extraction des pixels de bords, comprenant :

une sous-étape de passage, sur les pixels de l'image lissée, d'un lot de P filtres régulièrement angulairement orientés de π/P en π/P, qui chacun détermine une moyenne d'intensité de pixels situés de part et d'autre du pixel courant, à une distance (Di) supérieure au rayon (R$_i$) des vaisseaux dans ladite image lissée, et qui attribue cette moyenne au pixel courant,
une sous-étape de formation d'une image du fond (J$_{iBG}$) où chaque pixel se voit attribuer la valeur d'intensité la plus basse parmi les intensités déterminées par les filtres du lot,
une sous-étape de soustraction du fond dans l'image lissée.

11. Dispositif pour système médical, pour le traitement d'images médicales numériques représentant des objets en forme de rubans sur un fond, comprenant un système d'acquisition d'une image numérique, un système de traitement d'image ayant accès aux données de l'image numérique et à un système d'affichage des images acquises et les images traitées, dispositif dans lequel le système de traitement d'image comprend un microprocesseur pour mettre en oeuvre un procédé selon l'une des revendications 1 à 10.

**Patentansprüche**

1. Verfahren zur Verarbeitung eines numerischen Bildes zur automatischen Extraktion von grundsätzlich auf einem Hintergrund dargestellten bandförmigen Objekten, wobei dieses Verfahren eine Operation zur Skelettierung der Objekte beinhaltet und das Verfahren **dadurch gekennzeichnet** ist, das es Schritte enthält zur:

1) Bildung ausgehend vom nicht aufgegliederten Bild (J$_o$) von geglätteten nicht aufgegliederten Bildern (J$_i$) in mehreren Maßstäben (σ$_i$),
2) Extraktion der Randpixel der Objekte in jedem geglätteten Bild einschließlich der Extraktion eines Pixels als Randpixel eines Objektes, wenn der Wert des mit diesem Pixel assoziierten Intensitätsgradienten lokal in einer aufgegliederte Orientierungsrichtung( θ$_1$... θ$_M$) dieses Gradienten maximal ist,
3) Extraktion von potentiellen Medianpixeln (Ω$_{ip}$) in jedem geglätteten Bild, einschließlich der Extraktion eines Pixels als potentielles Medianpixel, wenn es im Zentrum ( Ω$_i$ eines Kreises mit einem Radius (R$_i$) lokalisiert ist, über eine Proportionalitätskonstante (k) mit dem

Maßstab (σ$_i$) verbunden, an den extrahierten Rändern tangential zu einem gesonderten Randpixelpaar (E$_1$, E$_2$), und wenn es mit dem Vertrauensmaß verbunden ist, dass das Zentrum (Ω$_i$) des Kreises und die Pixel des besagten Randpixelpaares (E$_1$, E$_2$) grundsätzlich ausgerichtet sind,
4) Extraktion der Medianpixel Ω$_{iM}$ im numerischen Bild, einschließlich der Extraktion eines Pixels als Medianpixel durch eine erste Auswahl der aus den verschiedenen geglätteten Bildern extrahierten Medianpixel, die das maximale Vertrauensmaß für eine selbe Lokalisierung haben, und durch eine zweite Auswahl der verbleibenden potentiellen Medianpixel, die lokal eine grundsätzlich substantielle Intensität entsprechend der Ausrichtungsrichtung der zuvor extrahierten Medianpixel haben,
5) Verfolgung der besagten extrahierten Medianpixel in einem numerischen Bild (J$_{MED}$), gebildet aus den extrahierten Medianpixeln, um die Skelette der Objekte zu bilden.

2. Verfahren nach Anspruch 1, in dem in Schritt 3) ein Pixel als potentielles Medianpixel (Ω$_{ip}$) extrahiert wird, mit dem Zentrum (Ω$_i$) des besagten Kreises assoziiert:

wenn die Pixel des besagten Pixelpaares (E$_1$, E$_2$) unterschiedlichen Rands grundsätzlich in dem besagten Kreis befindlich sind, auf Tangentenradien des besagten Kreises, die grundsätzlich mit den aufgegliederten Orientierungsrichtungen der Gradienten der besagten Randpixel (E$_1$, E$_2$) des Paares übereinstimmen,
und wenn das besagte extrahierte potentielle Medianpixel mit einem vom Produkt des kleinsten Wertes der Intensitätsgradienten des Randpixelpaars mit dem Sinuswert des Halbwirikels zwischen den aufgegliederten Orientierungsrichtungen der entsprechenden Gradienten assoziiertes Vertrauensmaß hat und die Extraktion ebenso viele mit einer selben Lokalisierung (x, y) assoziierte potentielle Medianpixel aufweist, wie es derartige Paare in den verschiedenen geglätteten Bildern (J$_i$) gibt.

3. Verfahren nach Anspruch 2, in dem:

in Schritt 4) die erste Auswahl eines potentiellen Medianpixels unter mehreren potentiellen Medianpixeln selber Lokalisierung in verschiedenen geglätteten Bildern (J$_i$) die Extraktion desjenigen bewirkt, dessen das Vertrauensmaß bildendes Produkt maximal ist, und die zweite Auswahl eines Medianpixels unter verbleibenden potentiellen Medianpixeln die Extraktion desjenigen bewirkt, der eine maximale Intensität aufweist, betrachtet in einer rechtwinkligen Orientierungsrichtung zur aufgegliederten Orientierungsrichtung ($\psi_h$) der Winkelhalbierenden zwischen den aufgegliederten Orientierungsrichtungen ($\theta j$) der Gradienten der Randpixel des Paares (($E_1$, $E_2$) in Assoziation mit diesem Medianpixel.

4. Verfahren nach Anspruch 3, in dem:

in Schritt 5) das Tracking der extrahierten Medianpixel in Assoziation mit jedem extrahierten Medianpixel vorgenommen wird, mit Merkmalen einschließlich:

seiner Lokalisierung im numerischen Bild ($J_{MED}$),

seiner Intensität im numerischen Bild ($J_{MED}$),

dem Maßstab ($\sigma_i$) des geglätteten Bildes ($J_i$), aus dem es extrahiert wurde,

einer bevorzugten Richtung ($\psi_h$), gebildet aus den aufgegliederten Orientierungsrichtungen der Winkelhalbierenden zwischen den aufgegliederten Orientierungsrichtungen ($\theta j$) der Gradienten der beiden Randpixel ($E_1$,$E_2$) des Paares, das ihr im geglätteten Bild ($J_i$), aus dem es extrahiert wurde, assoziiert ist,

und der Bestimmung, ausgehend von einer Lokalisierung eines extrahierten Medianpixels, eines benachbarten Medianpixels, definiert als extrahiertes Medianpixel mit Distanz- (d), Intensitäts- (I) und Maßstabseigenschaften ($\sigma_i$), und Bevorzugung einer Richtung ($\psi_h$) innerhalb vorbestimmter Spannen und nach und nach Aneinandergliederung von benachbarten Medianpixel.

5. Verfahren nach einem der Ansprüche 2 bis 4, in dem:

Schritt 3) die Generierung eines Kreises im Zentrum ($\Omega_i$), lokalisiert am laufenden Pixel P (x, y) zeigt, gebildet aus um das Zentrum angeordneten Pixeln in einer grundsätzlich zum Radius ($R_i$) gleichen Distanz, proportional zum Maßstab ($\sigma_i$) des geglätteten Bildes ($J_i$), wobei diese Pixel des Kreises außerdem auf Radien in aufgegliederten Orientierungsrichtungen ($\theta_1... \theta_M$) angeordnet sind, in Assoziation mit den Intensitätsgradienten der Randpixel, und das die Passage dieses Kreises durch das geglättete Bild beinhaltet, die Suche eines ersten Randpixels ($E_1$), das grundsätzlich mit einem Pixel des Kreises übereinstimmt, mit einer aufgegliederten Richtung ($\theta_{E1}$) des Gradienten, die grundsätzlich mit dem Radius des Kreises übereinstimmt und, nachdem dieses erste Randpixel (E1) gefunden wurde die Suche eines zweiten Randpixels (E2), das grundsätzlich mit einem anderen Randpixel übereinstimmt, mit einer aufgegliederten Orientierungsrichtung ($\theta_{E2}$) des Gradienten, die grundsätzlich mit dem entsprechenden Radius des Kreises übereinstimmt, um ein Pixelpaar (E1, E2) zu bilden, mit einem zum Pixelzentrum ($\Omega_i$) assoziierten Rand, was ein potentielles Medianpixel ($\Omega_{ip}$) bildet.

6. Verfahren nach einem der Ansprüche 2 bis 5, einschließlich in Schritt 2) der Extraktion von Randpixeln, der Bestimmung von Orientierungen der Intensitätsgradienten, der Aufgliederung dieser Orientierungen in eine Vielzahl von Richtungen ($\theta_1$ bis $\theta_M$), angular aufgeteilt von $\pi/M$ in $\pi/M$ auf einer geglätteten Bildfläche in dem betrachteten Maßstab ($\sigma_i$) und der Anwendung eines Kriteriums zur Extraktion der Randpixel, bestehend aus der Bedingung, dass ein Pixel als Randpixel erfasst und später extrahiert wird, wenn der Wert des Gradienten maximal in lokaler Betrachtung in dieser bestimmten aufgegliederten Richtung liegt.

7. Verfahren nach Anspruch 6, einschließlich in Schritt 4) der zweiten Auswahl der Medianpixel, der Bestimmung einer aufgegliederten Orientierungsrichtung der Winkelhalbierenden zur Bildung einer bevorzugten Richtung ($\psi_h$) in Assoziation mit dem potentiellen Medianpixel ($\Omega_{iP}$) dem Abtasten des betrachteten geglätteten Bildes rechtwinklig zu dieser bevorzugten Richtung und der Auswahl eines Medianpixels mit extremem Intensitätswert in dieser Richtung in einem zum Radius ($R_i$) des Kreises kleineren oder gleich großen Fenster.

8. Verfahren nach einem der Ansprüche 1 bis 7, mit zusätzlich einem Schritt zur Rekonstruktion der bandförmigen Objekte durch die Integration der Kreisflächen verschiedener Radien ($R_i$), mit den Maßstäben ($\sigma_i$) verbunden, mit als Zentrum den Skelettpixeln unter Zuteilung der Intensitäten dieser Zentren an diese Flächen.

9. Verfahren nach einem der Ansprüche 1 bis 8, mit zusätzlich einem Schritt zur Bestimmung der Durchmesservariationen der bandförmigen Objekte mit der Untersuchung der Radiusvariationen ($R_i$) unter Berücksichtigung einer Nummer (q) einer jeden aufeinanderfolgenden Pixeln zugeteilten Folge des Skeletts.

10. Verfahren nach einem der Ansprüche 1 bis 9, mit einschließlich einem Schritt zur Extraktion des Hintergrunds, bewerkstelligt an geglätteten Bildern vor dem Schritt zur Extraktion der Randpixel, bestehend aus:

einem Unterschritt zur Passage der Pixel des geglätteten Bildes durch einen Satz von P Filtern, regelmäßig angular von $\pi/P$ in $\pi/P$ orientiert, die jeweils einen Intensitätsdurchschnitt der beiderseits des laufenden Pixels befindlichen Pixel festlegen, in einer zum Radius ($R_i$) der Gefäße in dem gesagten geglätteten Bild größeren Distanz (Di), und die dem laufenden Pixel diesen Durchschnitt zuteilen,

einem Unterschritt zum Aufbau eines Hintergrundbildes ($J_{iBG}$), wo jedem Pixel der niedrigste Intensitätswert unter den von den Filtern des Satzes festgelegten Intensitäten zugeteilt wird,

einem Unterschritt zur Subtraktion des Hintergrunds im geglätteten Bild.

11. Vorrichtung für medizinisches System zur Verarbeitung numerischer medizinischer Bilder mit bandförmigen Objekten auf einem Hintergrund, einschließlich einem Bildaufnahmesystem, einem Bildverarbeitungssystem mit Zugang zu den numerischen Bilddaten und einem Anzeigesystem der aufgenommenen Bilder und der verarbeiteten Bilder, Vorrichtung, in dem das System zur Verarbeitung von Bildern einen Mikroprozessor zur Umsetzung des Verfahrens nach einem der Ansprüche 1 bis 10 aufweist.

## Claims

1. A digital image processing method for automatic extraction of substantially strip-shaped objects represented on a background, which method includes an operation for the skeletonizing of objects and is **characterized in that** it comprises steps for:

1) forming smoothed non-discretized images (Ji) at several scales ($\sigma$i) from the digital image (Jo),

2) extracting in each smoothed image boundary pixels of objects, comprising the extraction of a pixel as a boundary pixel of an object when the value of the intensity gradient associated with this pixel is locally maximum in a discretized orientation direction ($\Theta1 ... \Theta M$) of this gradient,

3) extracting potential median pixels ($\Omega iP$) in each smoothed image, comprising the extraction of a pixel as a potential median pixel when it is located at the center ($\Omega i$) of a circle having a radius (Ri) which is linked to the scale ($\sigma$i) by a proportionality constant (k), tangent to the boundaries extracted at a pair of distinct boundary pixels (E1, E2), and when it is associated with a measure of dependability that the center ($\Omega_i$) of the circle and the pixels of said pair of boundary pixels (E1, E2) are substantially aligned,

4) extracting median pixels ($\Omega iM$) in the digital image, comprising the extraction of a pixel as a medium pixel by way of a first selection of potential median pixels extracted from different smoothed images which have the maximum measure of dependability for the same location, and by way of a second selection of remaining potential median pixels which locally have a maximum intensity substantially in the direction of alignment of the previously extracted median pixels,

5) tracking of said extracted median pixels in a digital image (JMED) formed by extracted median pixels in order to construct skeletons of objects.

2. A method as claimed in claim 1, in which

in the step 3) a pixel is extracted as a potential median pixel $\Omega iP$ associated with the center ($\Omega i$) of said circle:

if the pixels of said pair (E1, E2) of distinct boundary pixels are situated substantially on said circle, on tangent rays of said circle coinciding substantially with discretized orientation directions of gradients of said boundary pixels (E1, E2) of the pair, and when said extracted potential median pixel is associated with a measure of dependability which is formed by the product of the smallest value of the intensity gradients of the boundary pixels of the pair and the value of the sine of the half-angle between the discretized orientation directions of the corresponding gradients, and also includes the extraction of as many potential median pixels associated with the same location (x,y) as there are such pairs in the different smoothed images (Ji).

3. A method as claimed in claim 2, in which in the step 4) the first selection of a potential median pixel from among several potential median pixels of the same location in the different smoothed images (Ji) extracts that pixel for which the product constituting the measure of dependability is maximum, and the second selection of a median pixel from among remaining potential median pixels extracts that pixel which presents a maximum intensity considered in an orientation direction perpendicular to the discrete orientation direction ($\psi h$) of the bisector of the angle between the discretized orientation directions ($\Theta j$) of the gradients of the boundary pixels of the pair (E1, E2) associated with this median pixel.

4. A method as claimed in claim 3, in which in the step 5) the tracking of the extracted median pixels is carried out by associating each extracted median pixel with characteristics which include:

   its location in the digital image (JMED),
   its intensity in the digital image (JMED),
   the scale ($\sigma i$) of the smoothed image (Ji) wherefrom it is extracted,
   a privileged direction ($\psi h$) which is formed by the discrete orientation direction of the bisector of the angle between the discretized orientation directions ($\Theta j$) of the gradients of the two boundary pixels (E1, E2) of the pair which is associated therewith in the smoothed image (Ji) wherefrom it is extracted,
   and the determination, on the basis of a location of an extracted median pixel, of an adjacent median pixel which is defined as an extracted median pixel having characteristics in respect of distance (d), intensity (I), scale ($\sigma i$) and privileged direction ($\psi h$) which lie in predetermined ranges, and the step by step concatenation of adjacent median pixels.

5. A method as claimed in one of the claims 2 to 4, in which:

   the step 3) includes the generating of a circle which has a center ($\Omega i$) located at the current pixel (P(x,y)) and is formed by pixels disposed around the center at a distance therefrom which is substantially equal to the value of the radius (Ri) which is proportional to. the scale ($\sigma i$) of the smoothed image (Ji), said pixels of the circle also being disposed on rays in the discretized orientation directions ($\Theta 1 ... \Theta M$) associated with the intensity gradients of the boundary pixels,
   and includes the application of this circle across the smoothed image, the search for a first boundary pixel (E1) which coincides substantially with a pixel of the circle and has a discrete gradient orientation direction ($\Theta E1$) coinciding substantially with the corresponding radius of the circle and, if this first boundary pixel (E1) is found, the search for a secdnd boundary pixel (E2) which coincides substantially with a distinct pixel of the circle which has a discrete gradient orientation direction ($\Theta E2$) coinciding substantially with the corresponding radius of the circle, in order to form a pair of boundary pixels (E1, E2) associated with the central pixel ($\Omega i$) forming a potential median pixel ($\Omega i P$).

6. A method as claimed in one of the claims 2 to 5, in which the step 2) for the extraction of boundary pixels includes the determination of intensity gradient orientations, the discretization of these orientations in a plurality of directions ($\Theta 1$ to $\Theta M$) which are angularly distributed from $\pi/M$ to $\pi/M$ in the plane of the smoothed image at the scale considered ($\sigma i$), and application of a criterion for the extraction of boundary pixels which is constituted by the condition that a pixel is detected as a boundary pixel, and is ultimately extracted, if the value of the gradient is maximum, considered locally in that discrete direction determined.

7. A method as claimed in claim 6, in which the step 4) for the second selection of median pixels includes the determination of a discretized orientation direction of the bisector forming a privileged direction ($\psi h$) associated with the potential median pixel ($\Omega i P$), the scanning of the smoothed image considered perpendicularly to said privileged direction, and the selection of a median pixel of extreme intensity in said direction in a window whose width is smaller than or equal to the radius (Ri) of the circle.

8. A method as claimed in one of the claims 1 to 7, which also includes a step for the reconstruction of strip-shaped objects by integration of the surfaces of circles which have a different radius (Ri), linked to the scales ($\sigma i$), and have the pixels of the skeleton as their centers, by attributing the intensities of those centers to those surfaces.

9. A method as claimed in one of the claims 1 to 8, which also includes a step for determining variations of diameters of strip-shaped objects by examining the variations of the radius (Ri) as a function of a number (q) of a succession attributed to each consecutive pixel of the skeleton.

10. A method as claimed in one of the claims 1 to 9, which includes a step for background extraction which is performed on the smoothed images prior to the step for the extraction of the boundary pixels, which background extraction step includes:

    a sub-step for applying a group of P filters which are regularly angularly oriented from $\pi/P$ to $\pi/P$ to the pixels of the smoothed image, each filter determining a mean intensity of pixels which are situated to both sides of the current pixel at a distance (Di) which is larger than the radius (Ri) of the vessels in said smoothed image, and attributing this mean value to the current pixel,
    a sub-step for forming a background image (JiBG) in which each pixel is attributed the lowest intensity value from among the intensities determined by the filters of the group,
    a sub-step for the subtraction of the background in the smoothed image.

11. A device for a medical system for the processing of digital medical images representing strip-shaped objects on a background, which device includes a system for the acquisition of a digital image, an image processing system having access to the data of the digital image and to a system for the display of the images acquired and the images processed, the image processing system in said device including a microprocessor for carrying out a method as claimed in one of the claims 1 to 10.

FIG. 1A

FIG. 1B

FIG. 1C

FIG. 1D

FIG. 1E

FIG. 1F

FIG. 1G

FIG. 1H

FIG. 1I

FIG. 1J

FIG. 7

100

10 N
$J'_N$

10.i

$J'_1$

$J'_i$

10.1

$J_{00}$

110

$J_0$

20.i

$J_i$

$Ji_{BG}$

Ki

40.i

30.i

50.i

$J_{iso}$

Jp

$J_{MED}$

60

70

80

$J_{SK}$

$J_R$

82

81

FIG. 2

FIG. 3A

FIG. 3B

FIG. 4

FIG. 8

FIG. 5A

FIG. 5B

FIG. 5C

FIG. 5D

FIG. 6